# EUROPEAN PATENT APPLICATION

(11) **EP 4 549 738 A1**
(43) Date of publication of application: **07.05.2025**
(21) Application number: 24208160.2
(22) Date of filing: 22.10.2024
(51) Int. Cl.: F04D 13/06, F04D 29/66

(54) **CANNED MOTOR PUMP**

(30) Priority: 30.10.2023 DK PA202370556
(71) Applicant: Grundfos Holding A/S, 8850 Bjerringbro (DK)
(72) Inventor: Lunøe, Morten, 8850 Bjerringbro (DK)
(74) Representative: Patentanwälte Hemmer Lindfeld Frese Partnerschaft mbB

(57) **Abstract**

The invention refers to a pump unit comprising at least one impeller (4) and an electric motor connected to the at least one impeller (4) and comprising a stator (12), a rotor (8) and a can (18) between stator (12) and rotor (8), wherein the can (18) on its first axial end is in engagement with a support structure (10), wherein at least one axial damping part (32) is arranged between an axial surface (26) of the can (18) and the support structure (10), and at least one radial damping part (34) is arranged between an outer circumferential surface of the can (18) and the support structure (10).

## Description

The invention refers to a pump unit comprising at least one impeller and a wet-running electric motor.

Pump units like centrifugal pump devices, for example circulator pumps usually comprise at least one impeller which is driven by an electric drive motor. The electric drive motor usually is configured as a wet-running motor with a can between the stator and the rotor. The can separates the dry stator space and the wet rotor space. In common configurations there is arranged a bearing for the rotor shaft inside the rotor can. For sufficient support of the rotor can the rotor can may be in engagement with a surrounding support structure.

The can between the rotor and stator has an impact on the magnetic field between stator and rotor, since the can requires a greater distance between rotor and stator. This has a negative influence on the efficiency of the motor. To increase the efficiency, it is desired to reduce the gap between rotor and stator which requires a minimum thickness of the rotor can.

It is the object of the invention to allow a can having a reduced thickness. This object is achieved by a pump unit having the features defined in claim 1. Preferred embodiments are defined in the dependent subclaims, the following description and the accompanying drawings.

The pump unit according to the invention comprises at least one impeller and an electric motor which is connected to the at least one impeller to rotate the impeller. The motor comprises a stator and a rotor, wherein the rotor is connected to the impeller, preferably via a rotor shaft. The electric motor is a wet-running electric motor with a can arranged between the stator and the rotor such that the rotor is running inside the fluid, whereas the stator is arranged in a dry space of the motor. Such a pump unit, i.e. a centrifugal pump unit, preferably is configured as a circulator pump, which may be used in hydronic systems like heating and/or cooling systems.

For support of the rotor can the can on its first axial end is in engagement with a support structure, i.e. a support structure surrounding the can. The support structure may be connected or may be part of the stator and/or the surrounding motor housing.

According to the invention there is arranged at least one axial damping part between an axial surface of the can and the support structure. Furthermore, there is arranged at least one radial damping part between an outer circumferential surface of the can and the support structure. The axial and the radial damping part allow a support of the can in axial and radial direction via a damping part arranged therebetween. The damping parts avoid vibrations occurring in the rotor can to be transferred to the surrounding support structure. Thus, the stator and other components connected to the support structure, for example an electronic housing and electronic components are kept free from vibrations. Such vibrations in particular may occur with cans having a low wall thickness. Thus, the arrangement of the damping parts in the axial and the radial support of the can allows to further reduce the wall thickness of the rotor can without undesired vibrations being transferred to the entire surrounding pump structure and further components of the pump unit. With the arrangement of an axial and a radial damping part between the can and the surrounding support structure, in particular a noise reduction can be achieved.

According to a preferred embodiment of the invention the at least one axial damping part and the at least one radial damping part are integrally formed by a single damping element. By this the number of required parts is minimized and the costs for producing the damping element can be reduced.

In a possible embodiment the at least one axial damping part is ring shaped and the at least one radial damping part is tongue shaped and extending from an inner circumference of the ring-shaped axial damping part. In a preferred embodiment several tongue shaped radial damping parts are arranged on the inner circumference of the axial damping part. The several tongue shaped radial damping parts preferably are distanced in circumferential direction from one another such that gaps or free spaces are formed between neighboring radial damping parts. Further preferably, the several radial damping parts are evenly distributed along the inner circumference of the axial damping part. The arrangement of several tongue-shaped damping parts allows an easier mounting with higher precision. The tongue shaped configuration of the radial damping parts allows to bend the radial damping parts relative to the axial damping part. This allows to create an integral damping part from a flat damping element and to bend the radial damping parts in a direction such that they can be arranged between an outer circumferential surface of the can and a surrounding support structure allowing to transmit forces in radial direction. The radial damping parts thereby substantially extend parallel to the longitudinal axis of the pump unit, i.e. the rotational axis of the impeller. The at least one axial damping part preferably extends in a direction transverse or normal to the longitudinal axis.

According to a further possible embodiment the at least one axial damping part and the at least one radial damping part are formed and preferably cut from a flat material. As described before the at least one radial damping part preferably is bend into a direction transverse to the axial damping part. This allows to easily form a three-dimensional damping comprising the axial damping part and the at least one radial damping part from a flat material. Cutting the flat material may be done by a cutting or punching device. Instead of cutting the damping parts from a flat material, the damping parts may be formed in different ways, preferably integrally formed. This may be done by a moulding and vulcanization process. Alternatively, the radial damping part and the axial damping part can be integrally formed by injection molding, 3D-printing or other suitable method. For cutting the material from a flat material, different cutting methods could be used, for example punching or water jet cutting.

Preferably the at least one axial damping part and the at least one radial damping part are made from an elastic material, preferably rubber or synthetic rubber, further preferably EPDM (ethylene propylene diene monomer rubber). Such material can be provided as a flat mat or rolled material. The flat material can be cut or punched into the desired shape, for example into a ring-shaped axial damping part with radial extending tongues arranged on its inner circumference, wherein in the following the tongues are bent in axial direction to form the radial damping parts. The elastic material provides the desired damping properties. By adapting the elasticity the material may be adapted to the vibration behavior of the can. Furthermore, such a material may provide a required stiffness to allow a transfer of occurring forces, in particular forces from a bearing assembly arranged inside the can.

The surrounding support structure for example is connected to the motor housing or a part of the motor housing. Alternatively, the support structure may be part of the stator assembly or stator device of the pump unit, for example connected or formed by an iron part of the stator assembly. Such a support structure provides a required stiffness to support a bearing assembly arranged inside the can and allowing a flux of force from the impeller via the rotor, a rotor bearing, the rotor can and the damping parts into the support structure.

The first axial end of the can, in a further embodiment, may be a closed end. Thus, the can is cup-shaped. Such a can is tightly sealed towards the stator space. Preferably a shaft bearing may be fixed inside the can, preferably close to its first axial end. Such a bearing supports the free end of the rotor shaft, i.e. the end distanced from the at least one impeller. Preferably the bearing is a radial bearing transmitting forces in radial direction. An axial bearing, preferably, is arranged close to the impeller. Furthermore, there may be a second radial bearing on the other side of the rotor, i.e. adjacent to the impeller.

The can in one example may be made from steel, in particular stainless steel. Alternatively, the can may be made from a composite material, for example a fiber reinforced plastic material. Furthermore, such a composite material may have a sealing layer or coating to provide a tightness against diffusion. Stainless steel or composite material allow to produce a rotor can with a minimized wall thickness. According to a further preferred embodiment the wall thickness of the can is smaller than 0,25 mm, further preferable smaller than 0,2 mm, for example 0,18 mm or thinner. Such minimized wall thickness in particular can be realized in a stainless steel can.

According to a further preferred embodiment the support structure comprises an axial surface facing the can and being in contact with the at least one axial damping part. This allows a transfer of axial forces from the can, via the axial damping element onto the axial surface of the support structure. Furthermore, the support structure preferably comprises an inner circumferential surface extending transverse to the axial surface and being in contact with the at least one radial damping part. This allows to transfer forces from the can, i.e. a outer circumferential wall of the can in radial direction via the radial damping part onto the inner circumferential surface of the support structure.

In the following the invention is described by way of example with reference to the accompanying drawings. In these:
- Fig 1: shows a cross section of a pump unit according to the invention,
- Fig 2: showing an enlarged portion of a cross section of a pump unit according to the invention, and
- Fig 3: shows a plan view of a damping element.

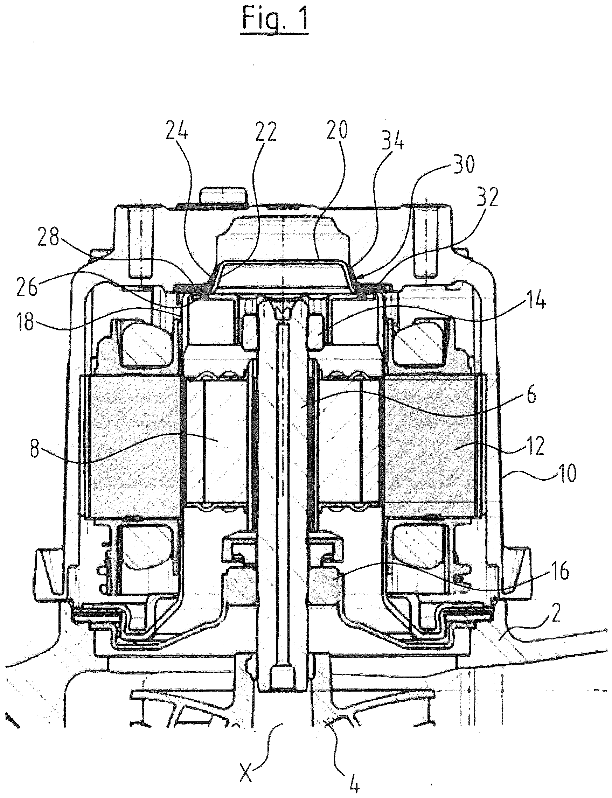

The pump device shown in figure 1 is a centrifugal pump, which may be used as a circulator pump in a hydronic system. As usual the pump device comprises a pump housing 2 with an impeller 4 arranged therein. The impeller is connected to a rotor shaft 6 carrying a magnetic rotor 8 of an electric motor. The electric motor is arranged inside a motor housing 10 which is connected to the pump housing 2. Inside the motor housing 10 there is arranged the stator 12 of the electric motor, comprising and iron core and required coils.

The rotor shaft 6 is supported by two bearings 14 and 16, wherein both bearings 14 and 16 are radial bearings. The bearing 16 in addition acts as an axial bearing. Between the rotor 8 and the stator 12 there is arranged a can 18 separating the dry stator space which contains the stator 12 from the wet rotor space containing the rotor 8. The bearing 14 is supported inside the cup-shaped can 18 close to the closed end 20 of the can 18. To transmit forces acting on the can 18, in particular forces occurring from the bearing 14 and the pressure inside the can 18, onto a surrounding supporting structure the closed end 20 of the can 18 is engaged with the motor housing 10 as a support structure.

Close to its closed end 20 the can 18 has a circumferential wall 22 facing an inner circumferential surface 24 of the motor housing 10. Surrounding the circumferential wall 22 the can 18 as shown in figure 1 has a shoulder extending in a direction transverse to the rotational axis X of the impeller 4 and forming an axial support surface 26 of the can 18. This axial support surface 26 of the can 18 faces an inner axial surface 28 of the motor housing 10. Between the axial support surface 26 and the inner axial surface 28 and between the circumferential wall 22 and the inner circumferential surface 24 there is arranged a damping element 30. The damping element as an integral element comprises an axial damping part 32 which is arranged between the axial support surface 26 and the inner axial surface 28, and several radial damping parts 34 being arranged between the circumferential wall 22 and the inner circumferential wall 24.

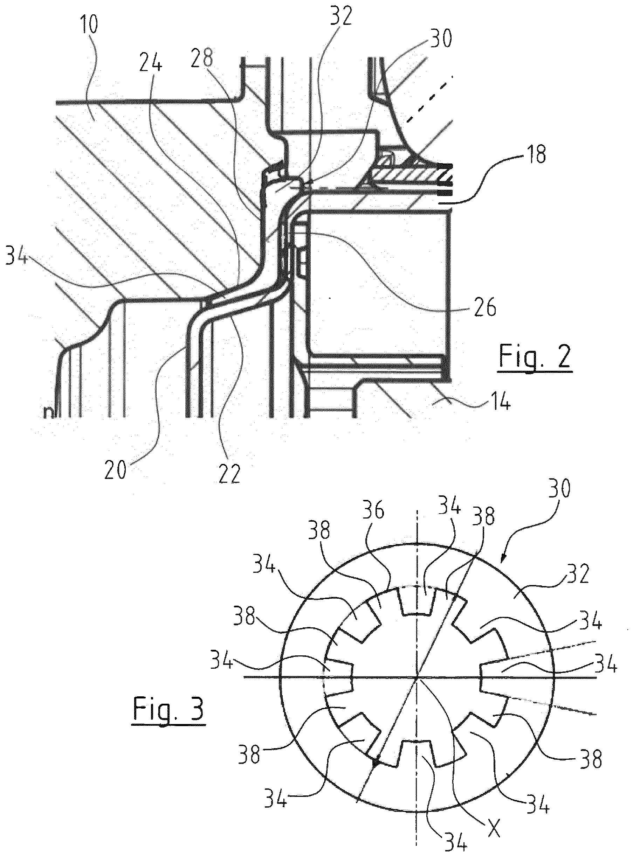

The configuration and arrangement of the damping element 30 is described in further detail with reference to figure 2 showing an enlarged cross-sectional view of a damping element 30 according to the invention, and with reference to figure 3. As can be seen in figure 3 the damping element 30 is produced as a flat damping element, for example from a mat of elastic material. The damping element 30 is cut in a shape consisting of a ring-shaped axial damping part 32 with the radial damping parts 34 being tongue shaped and extending from an inner circumference 36 of the ring-shaped axial damping part 32. In this example there are eight tongue shaped radial damping parts 34 which are evenly distributed over the inner circumference 36. The radial damping parts 34 are spaced from one another forming gaps or free spaces 38 therebetween. The radial damping parts 34 as seen in the top view in figure 3 have a trapezoidal shape narrowing towards the radial inner end.

When inserted into the motor housing 10, i.e. between the motor housing 10 and the can 18 the flat damping element 30 as shown in figure 3 is bent into a three-dimensional shape as shown in the cross section in figures 1 and 2. In particular the radial damping parts 34 are bent into an axial direction, substantially parallel to the longitudinal axis X of the pump device. In this configuration the axial damping part 32 is arranged between the axial support surface 26 and the inner axial surface 28 and the radial damping parts 34 are arranged between the circumferential wall 22 of the can 18 and the inner circumferential surface 24 of the surrounding motor housing. By this configuration the can at its closed and 20 is supported in axial and radial direction via the damping element 30 avoiding vibrations to be transmitted from the can 18 onto the motor housing 10 and further connected parts of the pump unit as for example electronic components.

### Reference numerals

- 2: pump housing
- 4: impeller
- 6: rotor shaft
- 8: rotor
- 10: motor housing
- 12: stator
- 14, 16: bearings
- 18: can
- 20: closed end of the can
- 22: circumferential wall of the can
- 24: inner circumferential surface
- 26: axial support surface
- 28: inner axial surface
- 30: damping element
- 32: axial damping parts
- 34: radial damping parts
- 36: inner circumference
- 38: free spaces
- X: longitudinal axis/rotational axis

## Claims

1. Pump unit comprising at least one impeller (4) and an electric motor connected to the at least one impeller (4) and comprising a stator (12), a rotor (8) and a can (18) between stator (12) and rotor (8), wherein the can (18) on its first axial end is in engagement with a support structure (10),
**characterized in that**
at least one axial damping part (32) is arranged between an axial surface (26) of the can (18) and the support structure (10),
and at least one radial damping part (34) is arranged between an outer circumferential surface of the can (18) and the support structure (10).

2. Pump unit according to claim 1, **characterized in that** the at least one axial damping part (32) and the at least one radial damping part (34) are integrally formed by a single damping element (30).

3. Pump unit according to claim 1 or 2, **characterized in that** the at least one axial damping part (32) is ring shaped and the at least one radial damping part (34) is tongue shaped and extending from the inner circumference of the axial damping part (32), wherein preferably several tongue shaped radial damping parts (34) are arranged on the inner circumference of the axial damping part (32).

4. Pump unit according to one of the claims 1 to 3, **characterized in that** the at least one axial damping part (32) and the at least one radial damping part (34) are formed and preferably cut from a flat material, wherein the at least one radial damping part (34) is bent into a direction transverse to the axial damping part (32).

5. Pump unit according to one of the preceding claims, **characterized in that** the at least one axial damping part (32) and the at least one radial damping part (34) are made from an elastic material, preferably rubber or synthetic rubber, further preferably EPDM (ethylene propylene diene monomer rubber).

6. Pump unit according to one of the preceding claims, **characterized in that** the support structure (10) is connected to the motor housing (10) or is a part of the motor housing (10).

7. Pump unit according to one of the preceding claims, **characterized in that** the first axial end of the can (18) is a closed end(20), wherein preferably a shaft bearing is fixed inside the can (18) close to its first axial end.

8. Pump unit according to one of the preceding claims, **characterized in that** the can (18) is made from stainless steel or a composite material.

9. Pump unit according to one of the preceding claims, **characterized in that** the support structure (10) comprises an axial surface facing the can (18) and being in contact with the at least one axial damping part (32) and that the support structure (10) comprises an inner circumferential surface (24) extending transverse to the axial surface and being in contact with the at least one radial damping part (34).
